**Europäisches Patentamt**

**European Patent Office**

**Office européen des brevets**

(19)

(11) Veröffentlichungsnummer: **0 366 862**

**A1**

(12)

# EUROPÄISCHE PATENTANMELDUNG

(21) Anmeldenummer: **89111263.3**

(22) Anmeldetag: **21.06.89**

(51) Int. Cl.⁵: **C21D 9/30 , C21D 1/10 , H05B 6/02**

(30) Priorität: **25.10.88 DE 3836268**

(43) Veröffentlichungstag der Anmeldung:
**09.05.90 Patentblatt 90/19**

(84) Benannte Vertragsstaaten:
**DE ES FR GB IT**

(71) Anmelder: **AEG-Elotherm GmbH**
**Hammesberger Strasse 31**
**D-5630 Remscheid-Hasten(DE)**

(72) Erfinder: **Jürgens, Robert, Dipl.-Ing.**
**Ölmühle 11e**
**D-5630 Remscheid(DE)**

(74) Vertreter: **Patentanwaltsbüro Cohausz & Florack**
**Postfach 14 01 20 Schumannstrasse 97**
**D-4000 Düsseldorf 1(DE)**

(54) **Härteanlage mit induktivitätsarmem Gehänge.**

(57) Die Erfindung betrifft eine Vorrichtung zum induktiven Härten von länglichen Werkstücken, insbesondere von Kurbelwellen. Diese besteht aus einem Härtebecken mit einer Einspannvorrichtung für das Werkstück und einem längs des Werkstücks beweg baren Härtewagen, der eine gegenüber dem Härtewagen verfahrbare Halterungseinheit 6 trägt, auf welcher ein dem zu härtenden Bereich des Werkstücks angepaßter Induktor 7 vorgesehen ist, der an der Sekundärseite an eines Transformators 9 angeschlossen ist, wobei der Transformator 9 primärseitig über flexible Stromführungselemente 13a,13b von einem Schwingkreisumrichter gespeist wird. Zur Herabsetzung der Schwingkreisverlustleistung ist vorgesehen, daß die Kondensatorgruppe 11 von einer Stromschiene 10 getragen in unmittelbarer Nähe des Primäranschlusses 12 des Transformators 9 auf der Halterungseinheit 6 angeordnet ist, so daß auch ein Betrieb mit einer Umrichterfrequenz zwischen 50 und 200 kHz ermöglicht wird.

Figur 1

EP 0 366 862 A1

## Härteanlage mit induktivitätsarmem Gehänge

Die Erfindung betrifft eine Vorrichtung zum induktiven Härten von länglichen Werkstücken, insbesondere von Kurbelwellen bestehend aus einem Härtebecken mit einer Einspannvorrichtung für das Werkstück bewegbaren Härtewagen, der eine gegenüber dem Härtewagen mehrachsig verfahrbare Halterungseinheit trägt, auf welcher ein auf den zu härtenden Bereich des Werkstückes einwirkender Induktor vorgesehen ist, der an den Sekundäranschluß eines Transformators angeschlossen ist, wobei der Transformator primärseitig mit einer Kondensatorgruppe verbunden ist und über flexible Stromführungselemente von einem Umrichter gespeist wird.

Eine solche Vorrichtung ist aus der DE-PS 23 32 832 bekannt. Bei dieser bekannten Vorrichtung sind an der Halterungseinheit neben dem Induktor, über den die Bearbeitung des Werkstücks erfolgt, auch der Transformator sowie eine Trägerplatte für diesen angeordnet. Diese Einheit ist innerhalb der Achsnormalebene des länglichen Werkstückes verfahrbar, da die Verbindung zwischen der Primärseite des Transformators und dem im Gehäuse des Härtewagens vorgesehenen Umrichter über flexible Zuleitungsstücke erfolgt. Die für den Betrieb des Umrichters erforderlichen Kondensatoren, die elektrisch parallel zu der durch Werkstück, Induktor und Transformator gebildeten Gesamtinduktivität geschaltet sind, sind bei der bekannten Vorrichtung ebenfalls im Gehäuse des Härtwagens angeordnet.

Diese Ausführung hat den Nachteil, daß durch die langen Verbindungswege zwischen den kapazitiven (Kondensatorgruppe) und den induktiven (Transformator plus Induktor) Lastelementen des Parallelschwingkreisumrichters, insbesondere auf den flexiblen Stromleitungen, hohe Zuleitungsverluste entstehen. Dies gilt um so mehr, da die Induktivität um so größer wird, je höher die Betriebsfrequenz des Umrichters ist.

Zur Verbesserung des induktiven Härtens, insbesondere zur Erhöhung der Konturengenauigkeit sowie der Reduzierung der Einhärtetiefen ist es jedoch erforderlich, von der beim Stand der Technik gebräuchlichen Mittelfrequenz von etwa 10 kHz als Betriebsfrequenz des Umrichters abzuweichen und Umrichterfrequenzen von 50 und mehr kHz anzustreben. Für diese Betriebsfrequenzen ist jedoch die aus dem Stand der Technik bekannte Vorrichtung aufgrund ihrer hohen Verluste nicht vorteilhaft einsetzbar.

Daher liegt der Erfindung die Aufgabe zugrunde, eine Vorrichtung der eingangs genannten Art derart weiterzuentwicklen, daß sie auch bei Betriebsfrequenzen von mehr als 50 kHz verwendbar ist.

Diese Aufgabe wird erfindungsgemäß dadurch gelöst, daß die Kondensatorgruppe von einer Stromschiene getragen in der unmittelbaren Nähe des primäranschlusses des Transformators auf der Halterungseinheit angeordnet ist.

Durch die erfindungsgemäße Lösung befinden sich sowohl die kapazitiven als auch die induktiven Lastelemente des Parallelschwingkreisumrichters auf der Halterungseinheit, wobei durch die elektrischen Verbindungen zwischen beiden Elementen mittels der Stromschiene eine sehr induktivitätsarme Bauweise erreicht werden kann und somit die Blindleistungsverluste gering gehalten werden können. Gleichzeitig dienen dabei die flexiblen Stromführungselemente nur noch der Wirkleistungsübertragung, so daß hierdurch der Energieverbrauch herabgesetzt wird. Ferner zeichnet sich die Erfindung durch eine kompakte Bauform aus, da die Kondensatorgruppe, die Stromschiene, der Transformator bzw. der Induktor eine bauliche Einheit bilden.

Eine vorteilhafte Ausführungsform ergibt sich, wenn die Kondensatorgruppe durch mehrere aneinandergrenzende entlang einer gemeinsamen Stromschiene angeordnete blockförmige Kondensatoren gebildet wird. Hierdurch lassen sich die Kondensatoren bei nicht nennenswerter Induktivitätserhöhung zu einer Kondensatorgruppe mit einer hohen Kapazität zusammensetzen.

Wenn die Stromschiene die Form mehrerer, parallelverlaufender Schienenstücke aufweist, die an einem gemeinsamen Mittelstück im Bereich des Primäranschlusses des Transformators zusammenlaufen, kann eine große Anzahl von Kondensatoren auf sehr kleinem Raum untergebracht werden, wobei der Abstand aller Kondensatoren zum Primäranschluß vergleichsweise gering und die Anordnung damit induktivitätsarm bleibt.

Bevorzugt wird nach der Erfindung eine Stromschiene, die im Querschnitt eine Doppel-T-From aufweist, wobei sie aus zwei Hälften zusammensetzbar ist, die jeweils elektrich mit einem flexiblen Zuleitungsanschluß verbunden sind. Eine solche Stromschiene läßt sich fertigungstechnisch kostengünstig herstellen und montieren. Zudem ist die Kühlwirkung aufgrund der durch die Doppel-T-Form ausgebildeten Oberflächen der Stromschiene sehr günstig, ohne daß dies zu Lasten der geringen Induktivität geht.

Des weiteren wird bevorzugt, daß den Hälften der Stromschiene jeweils ein als Anschlußblech ausgeführter elektrischer Kontakt eines Blockkondensators zugeordnet ist. Anstelle der aus dem Stand der Technik bekannten Kondensatoren mit einzelnen Kontakten werden erfindungsgemäß Blockkondensatoren mit flächigen Kontaktblechen verwendet, so daß auch hierdurch einerseits ein guter Wärmeübergang und andererseits ein induktivitätsarmer Anschluß der Kondensatoren an die Stromschienen gewährleistet ist.

Wenn in den Stromschienenhälften eine durchgehende Längsbohrung in den Bereichen der Anschlußbleche der Blockkondensatoren vorgesehen ist, die von einem Kühlmedium durchströmbar ist, werden hierdurch nicht nur die Stromschiene, sondern auch die Kondensatoren direkt gekühlt. Hierdurch lassen sich die Leitungsverluste weiter herabsetzen.

Weiterhin kann der Zwischenraum im Bereich der benachbaren Flächen der beiden Stromschienenhälften mit einem elektrisch isolierenden, hochspannungsfesten Medium gefüllt sein, so daß Überschläge zwischen den beiden Stromschienenhälften selbst bei hohen Spannungen vermieden werden.

Schließlich kann auch die Ausgestaltung des Transformators als Scheibentransformator zur weiteren Verringerung der gesamten Verluste beitragen.

Die Erfindung wird im folgenden anhand einer ein Ausführungsbeispiel zeigenden Zeichnung näher erläutert

Dabei zeigen:

Fig. 1 eine perspektivische Darstellung des Ausführungsbeispiels für eine induktive Härtevorrichtung gemäß der Erfindung,

Fig. 2 eine vergrößerte Darstellung der in Fig. 1 dargestellten Halterungseinheit,

Fig. 3 einen Querschnitt entlang der Linie 3-3 in Fig. 2.

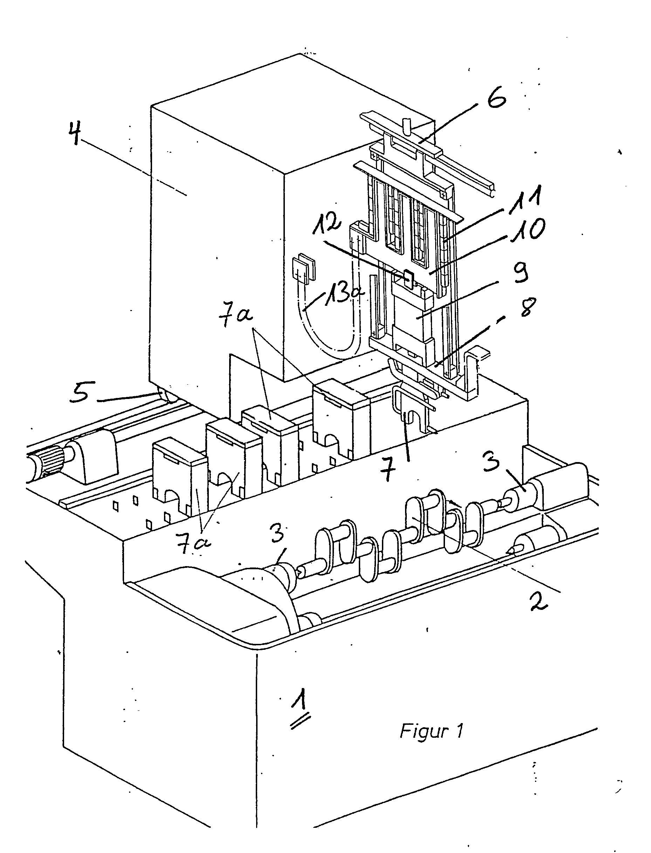

Wie in Fig. 1 dargestellt ist, ist ein zu härtendes längliches Werkstück 2 mittels einer Einspannvorrichtung 3 in einem Härtebecken 1 angeordnet. Weiter ist ein Härtewagen 4 vorgesehen, der über Rollen 5 entlang der Längsachse des Werkstücks 2 bewegbar ist. Außen am Härtewagen 4 ist eine Halterungseinheit 6 angebracht, die den Bereich des Werkstücks 2 überkragt. Die Halterungseinheit 6 ist über eine in ihrem oberen Bereich vorgesehene Schiene in einer Achsnormalebene des Werkstücks 2 sowohl horizontal als auch über eine weitere nicht dargestellte Schiene vertikal so verfahrbar, daß der an der Unterseite der Härteeinrichtung 6 angeordnete Induktor 7 dem zu härtenden Bereich des Werkstücks 2 zugeführt werden kann. Wahlweise sind andere Induktoren 7a vorgesehen, die anstelle des Induktors 7 an der Halterungseinheit 6 befestigt werden können. Hierzu weist die Halterungseinheit 6 eine Grundplatte 8 auf, an deren Unterseite die Induktoren 7,7a angeschlossen werden und auf der ein Scheibentransformator 9 aufgesetzt ist. Der Scheibentransformator 9 ist mit seiner Sekundärseite mit den Anschlüssen des Induktors 7 verbunden.

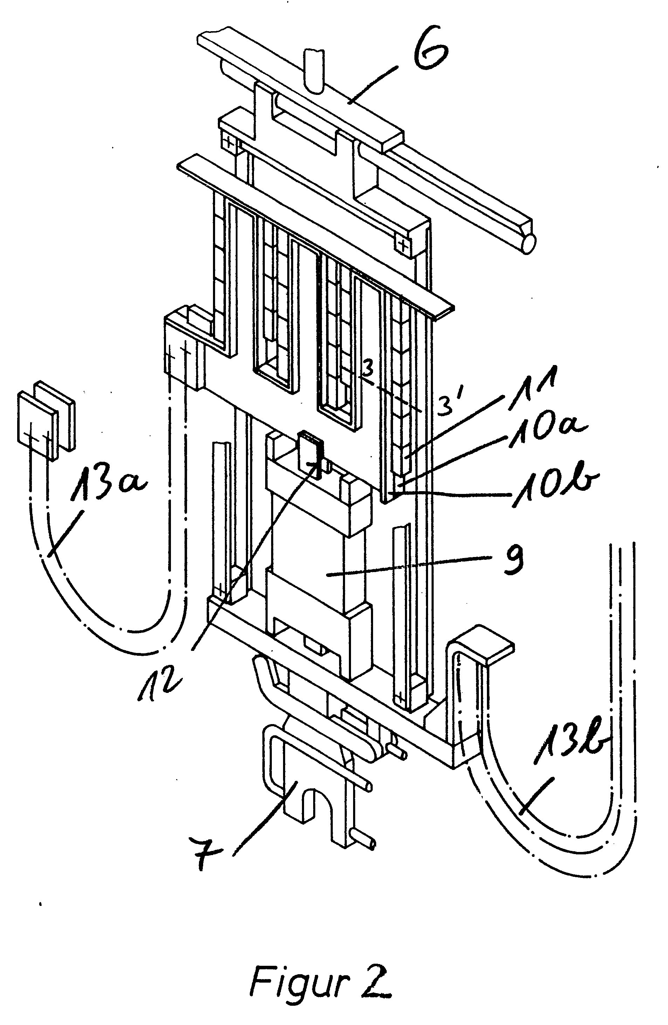

Primärseitig ist am Scheibentransformator 9 ein Primäranschluß 12 vorgesehen, der den Kontakt zu einer Stromschiene 10 herstellt, die sich oberhalb des Scheibentransformators 9 in der Halterungseinheit 6 befindet. Auf der Stromschiene 10 sind Reihen von blockförmigen Kondensatoren 11 angeordnet, die elektrisch parallel zur Primärseite des Scheibentransformators 9 geschaltet sind. Die Stromzufuhr zum Primäranschluß 12 erfolgt über flexible Zuleitungen 13a,13b (vgl. Fig. 2) und die Stromschiene 10. Die Versorgungsleistung für den aus Induktor, Werkstück, Scheibentransformator gebildeten induktiven Teil bzw. für den durch die Kondensatoren 11 gebildeten kapzitiven Teil des parallelschwingkreises wird von einem Parallelschwingkreisumrichter abgegeben, der sich beispielsweise innerhalb des Härtewagens 4 befindet. Die Anordnung der Halterungseinheit 6 ist vergrößert in Fig. 2 dargestellt.

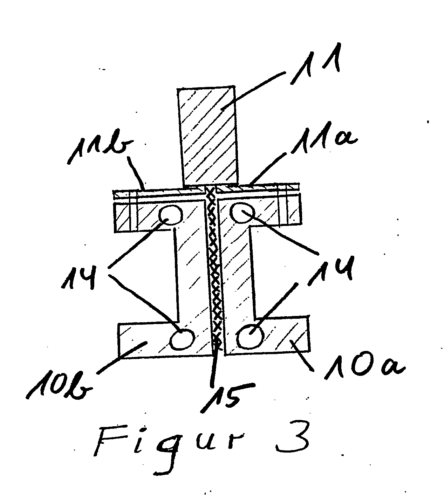

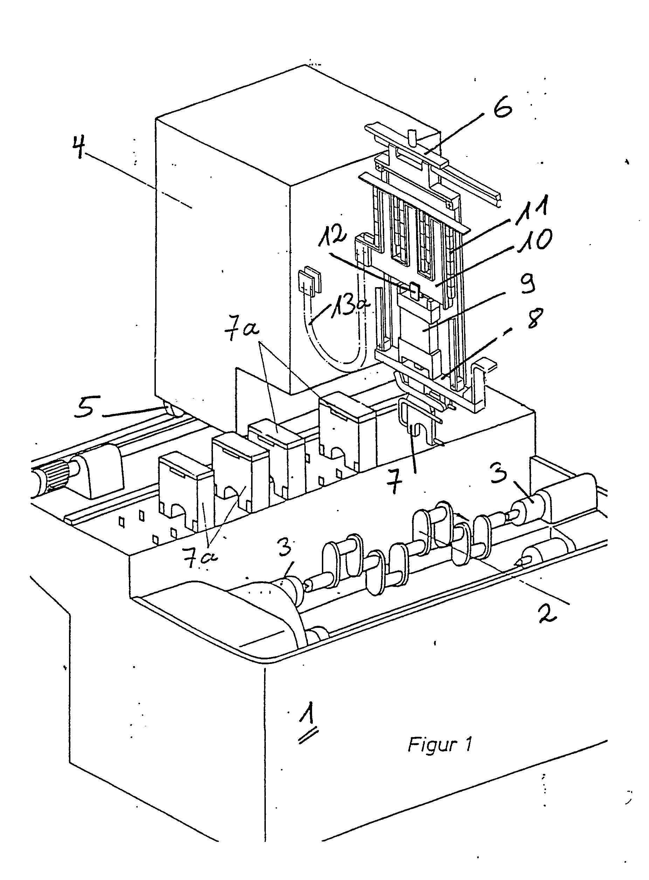

Wie der Schnitt entlang der Linie 3-3' in Fig. 2, der in Fig. 3 dargestellt ist, zeigt, weist die Stromschiene 10 im Querschnitt die Form eines Doppel-T-Stückes auf und besteht aus zwei Stromschienenhälften 10a,10b, die über einen Zwischenraum 15 räumlich voneinander getrennt und elektrisch gegeneinander isoliert sind. Jede der beiden Stromschienenhälften, die beispielsweise aus Kupfer ausgeführt sein können, ist über ein zugeordnetes Anschlußstück mit jeweils einer flexiblen Stromzuleitung 13a bzw. 13b verbunden. Jede der beiden Stromschienenhälften 10a,10b weist Längsbohrungen 14 etwa im Eckbereich des abgewinkelten Profils auf. Diese Längsbohrungen werden im Betrieb mit einem Kühlmedium versorgt. Das Kühlmedium wird über nicht dargestellte Anschlußstücke von der Quelle des Kühlmediums zugeführt und an der gegenüberliegenden Stelle wieder abgeführt.

Auf der Oberseite des durch die Stromschienenstücke 10a,10b gebildeten Doppel-T-Profils sind die jeweiligen blockförmigen Kondensatoren 11 angeordnet, wobei deren blechförmige Anschlußkontakte 11a,11b jeweils einer Stromschienenhälfte 10a,10b zugeordnet sind. Die jeweiligen Anschlußbleche 11a,11b sind über Schraubenverbinden mit den Oberseiten der jeweiligen Profilteile 10a,10b verbunden. Dadurch, daß die Kühlbohrungen 14 im unmittelbaren Bereich des zu kühlenden Kondensators liegen, wird hierdurch nicht nur die Stromschiene, sondern auch der Kondensator 11 wirksam gekühlt. Das im Zwischenraum 15 befindliche Isoliermedium sorgt dafür, daß auch bei hohen Potentialunterschieden zwischen den Anschlußkontakten 11a,11b des Kondensators 11 ein Überschlag zwischen beiden Stromschienenhälften nicht erfolgen kann.

Wie Fig. 2 zeigt, sind die Kondensatoren 11 zeilenförmig hintereinander angeordnet, wobei die Stromschiene 10 insgesamt aus mehreren Schienenstücken besteht, die parallel zueinander an der Halterungseinheit 6 angeordnet sind und in einem dem Primäranschluß 12 räumlich benachbarten gemeinsamen Endstück zusammenlaufen. Hierdurch wird der mittlere Abstand eines jeden Kondensators 11 vom Primäranschluß 12 möglichst gering gehalten und andererseits die auf der Halterungseinheit 6 insgesamt unterbringbare Kapazität erhöht, ohne daß zusätzliche Leitungsverbindungen zwischen den Kondensatoren und dem Primäranschluß 12 des Scheibentransformators 9 erforderlich wären.

Durch die beschriebene bauliche Vereinheitlichung von kapazitiver und induktiver Last des vom Umrichter gespeisten Parallelschwingkreises wird die Verlustleistung gegenüber den bekannten Härteanlagen erheblich reduziert. Hierzu trägt auch bei, daß entsprechend der erfindungsgemäßen Anordnung nunmehr über die flexiblen Stromleitungen 13a,13b nur noch im wesentlichen die Wirkleistung übertragen werden muß, während die Blindleistung hierüber nicht mehr geführt werden muß. Die beschriebene Vorrichtung läßt sich somit sehr vorteilhaft zum Betrieb mit transistorgesteuerten Schwingkreisumrichtern mit Betriebsfrequenzen zwischen 50 und 200 kHz einsetzen.

**Ansprüche**

1. Vorrichtung zum induktiven Härten von länglichen Werkstücken (2), insbesondere von Kurbelwellen, bestehend aus einem Härtebecken (1) mit einer Einspannvorrichtung (3) für das Werkstück (2) und einem längsseits des Werkstücks (2) bewegbaren Härtewagen (4), der eine gegenüber dem Härtewagen (4) mehrachsig verfahrbare Halterungseinheit (6) trägt, auf welcher ein auf den zu härtenden Bereich des Werkstückes (2) einwirkender Induktor (7) vorgesehen ist, der an den Sekundäranschluß eines Transformators (9) angeschlossen ist, wobei der Transformator (9) primärseitig mit einer Kondensatorgruppe (11) verbunden ist und über flexible Stromführungselemente (13) von einem Umrichter gespeist wird,
**dadurch gekennzeichnet,** daß die Kondensatorgruppe (11) von einer Stromschiene (10) getragen in unmittelbarer Nähe des Primäranschlusses (12) des Transformators (9) auf der Halterungseinheit (6) angeordnet ist.

2. Vorrichtung nach Anspruch 1,
**dadurch gekennzeichnet,** daß die Kondensatorgruppe (11) durch mehrere aneinanderangrenzende entlang der Stromschiene (10) angeordnete blockförmige Kondensatoren gebildet ist.

3. Vorrichtung nach Anspruch 1 oder 2,

**dadurch gekennzeichnet,** daß die Stromschiene durch mehrere parallel verlaufende Schienenstücke gebildet ist, die an einem gemeinsamen Mittelstück im Bereich des Primäranschlusses (12) zusammenlaufen.

4. Vorrichtung nach einem der Ansprüche 1 bis 3,
**dadurch gekennzeichnet,** daß die Stromschiene (10) im Querschnitt eine Doppel-T-Form aufweist, die aus zwei Hälften (10a,10b) zusammensetzbar ist, wobei jeweils eine Hälfte (10a,10b) elektrisch mit einem flexiblen Zuleitungsanschluß (13a,13b) verbindbar ist.

5. Vorrichtung nach einem der Ansprüche 1 bis 4,
**dadurch gekennzeichnet,** daß den Hälften (10a,10b) jeweils ein als Anschlußblech ausgeführter elektrischer Kontakt eines Blockkondensators (11) zugeordnet ist.

6. Vorrichtung nach einem der Ansprüche 1 bis 5,
**dadurch gekennzeichnet,** daß die Stromschienenhälften (10a,10b) jeweils eine durchgehende Längsbohrung im Bereich des Anschlußblechs (11a,11b) aufweisen, die von einem Kühlmedium durchströmbar ist.

7. Vorrichtung nach einem der Ansprüche 1 bis 6,
**dadurch gekennzeichnet,** daß der Zwischenraum (15) im Bereich der benachbarten Flächen der beiden Stromschienenhälften (10a,10b) mit einem elektrisch isolierenden hochspannungsfesten Medium auffüllbar ist.

8. Vorrichtung nach einem der Ansprüche 1 bis 7,
**dadurch gekennzeichnet,** daß der Transformator (9) ein Scheibentransformator ist.

Figur 1

Figur 2

Figur 3

Figur 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | SOVIET INVENTIONS ILLUSTRATED, Section M, Woche 8348, 18. Januar 1984, Derwent, London, Kurzfassung Nr. 83-831968/48; & SU-A-9 945 570 (WELDING IND) 07-02-1983 --- | 1 | C 21 D  9/30<br>C 21 D  1/10<br>H 05 B  6/02 |
| D,Y | FR-A-2 235 199  (AEG-ELOTHERM)<br>* Patentansprüche; Figuren * --- | 1 | |
| A | FR-A-1 440 377  (AEG-ELOTHERM) --- | | |
| A | FR-A-2 384 851  (AEG-ELOTHERM) --- | | |
| A | US-A-4 123 644  (P.N. SORENSEN) ----- | | |

**RECHERCHIERTE SACHGEBIETE (Int. Cl.5)**

C 21 D
H 05 B

**Der vorliegende Recherchenbericht wurde für alle Patentansprüche erstellt**

| Recherchenort | Abschlußdatum der Recherche | Prüfer |
|---|---|---|
| DEN HAAG | 31-01-1990 | MOLLET G.H.J. |

EPO FORM 1503 03.82 (P0403)